# EUROPEAN PATENT APPLICATION

(11) **EP 4 450 584 A1**
(43) Date of publication of application: **23.10.2024**
(21) Application number: 22907225.1
(22) Date of filing: 01.12.2022
(51) Int. Cl.: C09K 3/14, C01G 23/00, F16D 69/02

(54) **FRICTION MODIFIER, FRICTION MATERIAL COMPOSITION, FRICTION MATERIAL, AND FRICTION MEMBER**

(30) Priority: 13.12.2021 JP 2021201901
(71) Applicant: Otsuka Chemical Co., Ltd., Osaka-shi, Osaka 540-0021 (JP)
(72) Inventor: ITO, Yasuhito, Tokushima-shi, Tokushima 771-0193 (JP)
(74) Representative: Ter Meer Steinmeister & Partner
(86) International application number: PCT/JP2022/044380
(87) International publication number: WO 2023/112697

(57) **Abstract**

Provided is a friction modifier capable of increasing, when used in a friction material, the coefficient of friction of the friction material in a high-load region. A friction modifier is made of a titanate, is a salt of at least one element selected from the group consisting of alkali metals and alkaline earth metals, and has a decomposition rate of not less than 30% by mass and not more than 100% by mass when heated at 800°C for an hour in a nitrogen atmosphere.

## Description

### Technical Field

The present invention relates to friction modifiers made of titanates, friction material compositions using the friction modifiers, friction materials using the friction modifiers, and friction members using the friction modifiers.

### Background Art

Friction materials for use in brakes, such as disc brakes or drum brakes, constituting parts of braking devices for various types of vehicles, industrial machines, and so on are required to have a high and stable coefficient of friction, excellent wear resistance, and low aggressiveness toward counter-members. These friction materials are classified into three types: a semimetallic material containing steel-based fibers, such as steel fibers or stainless steel fibers, serving as a fibrous base material in an amount of not less than 30% by mass and less than 60% by mass; a low-steel material containing steel-based fibers in an amount of not less than 10% by mass and less than 30% by mass; and a NAO (non-asbestos-organic) material free of steel-based fibers. A friction material containing steel-based fibers in minute amounts is also classified as a NAO material.

In Japan and the U.S.A, because priority is given to the comfortableness, NAO materials, which have low aggressiveness toward counter-members and good balance between squealing and wear resistance, are predominantly used as friction materials. In Europe, low-steel materials have heretofore been used from the viewpoint of holding the coefficient of friction during braking from high speed, but NAO materials causing less brake squeal are increasingly used with the growing need for higher quality products.

Compositions used in friction materials (hereinafter, referred to as "friction material compositions") generally contain copper fibers or copper powder. A first role of copper is to give a thermal conductivity. Since copper has a high thermal conductivity, it diffuses heat produced during braking from the frictional interface, which makes it possible to reduce wearing of the friction material derived from an excessive temperature increase and suppress vibrations during braking. A second role of copper is to protect the frictional interface during high-temperature braking. Because of the spreadability of copper, it spreads across the surface of the friction material during braking to form a coating on the surface. In addition, copper transfers to the surface of a counter-member to form an adherent coating (hereinafter, referred to as a "transfer film") thereon. These coatings act as protective films, which enables reduction in wearing of the friction material during high-temperature braking and development of a stable coefficient of friction. However, in relation to copper-containing friction materials, abrasion powder produced from the friction materials during braking contains copper and is suggested to be likely to become a source of river, lake, and ocean pollutions. For this reason, in California and Washington, U.S.A., state laws have come into effect to forbid the sale and assembly into new cars of friction materials containing 5% by mass or more copper in 2021 and beyond or 0.5% by mass or more copper in 2025 and beyond.

For the above reason, attention is currently focused on titanates as components taking the role of a transfer film except for copper in NAO materials. Titanates include titanates having a tunnel crystal structure (for example, potassium hexatitanate) and titanates having a layered crystal structure (for example, potassium lithium titanate and potassium magnesium titanate) and these titanates are used singly or in any combination of them according to the intended use of the friction material. For example, there is proposed a friction material composition containing a titanate and barium sulfate particles having an average particle diameter of 0.1 µm to 20 µm (see Patent Literature 1).

### Citation List

### Patent Literature

Patent Literature 1: WO 2018/164028

### Summary of Invention

### Technical Problem

Recently, for braking of hybrid vehicles and electric vehicles coming into significantly widespread use, a regenerative braking system has been mounted on such a vehicle to recover frictional energy during braking. However, when the vehicle batteries are fully charged, the above mechanism does not act. In addition, the vehicle weight increases by the number of batteries mounted on the vehicle and, therefore, it is assumed that the load on the braking system increases by the weight increase. Furthermore, with widespread use of heavy and large vehicles as typified by SUV, it is becoming important for friction materials to have a higher coefficient of friction in a high-load region than ever. Moreover, the friction materials have a problem in that their braking force on overloaded vehicles going down steep roads in some mountainous areas is not sufficient.

A potential candidate for a titanate giving a coefficient of friction in a high-load region is potassium hexatitanate having a thermally stable crystal structure. However, this material is refrained from being used, primarily in Europe, over concerns about containing WHO fibers (fibrous particles having a length of 5 µm or more, a breadth of 3 µm or less, and an aspect ratio of 3 or more) exceeding the environmental standard. Alternatively, potassium lithium titanate and potassium magnesium titanate are known as titanates free from concerns about containing WHO fibers and have excellent wear resistance, but have a problem with their coefficient of friction in a high-load region.

An object of the present invention is to provide a friction modifier capable of increasing, when used in a friction material, the coefficient of friction of the friction material in a high-load region, a friction material composition using the friction modifier, a friction material using the friction modifier, and a friction member using the friction modifier. Solution to Problem

The present invention provides a friction modifier made of a titanate set forth below and a friction material composition, a friction material, and a friction member each using the friction modifier.

Aspect 1: A friction modifier made of a titanate, the titanate being a salt of at least one element selected from the group consisting of alkali metals and alkaline earth metals, the titanate having a decomposition rate of not less than 30% by mass and not more than 100% by mass when heated at 800°C for an hour in a nitrogen atmosphere.

Aspect 2: The friction modifier according to aspect 1, wherein when the titanate is heated at 800°C for an hour in a nitrogen atmosphere, a rate of formation of a titanate with a hollandite crystal structure is not less than 10% by mass and not more than 100% by mass.

Aspect 3: The friction modifier according to aspect 1 or 2, wherein the titanate comprises at least one of potassium lithium titanate and potassium magnesium titanate.

Aspect 4: The friction modifier according to any one of aspects 1 to 3, wherein the titanate is in form of platy particles .

Aspect 5: The friction modifier according to any one of aspects 1 to 4, wherein the titanate has an average particle diameter of not less than 0.1 µm and not more than 100 µm.

Aspect 6: The friction modifier according to any one of aspects 1 to 5, wherein the titanate has a specific surface area of not less than 0.1 m²/g and not more than 10 m²/g.

Aspect 7: The friction modifier according to any one of aspects 1 to 6, wherein the titanate has a rate of alkali metal ion dissolution of not less than 0.01% by mass and not more than 15% by mass.

Aspect 8: A friction material composition containing the friction modifier according to any one of aspects 1 to 7 and a binder and having a content of copper component of less than 0.5% by mass in terms of copper element.

Aspect 9: The friction material composition according to aspect 8, wherein a content of the titanate is not less than 1% by mass and not more than 40% by mass relative to a total amount of 100% by mass of the friction material composition.

Aspect 10: The friction material composition according to aspect 8 or 9, wherein a mass ratio of the titanate to the binder (titanate/binder) is not less than 0.1 and not more than 8.

Aspect 11: The friction material composition according to any one of aspects 8 to 10, wherein a content of steel-based fibers is less than 10% by mass relative to a total amount of 100% by mass of the friction material composition.

Aspect 12: A friction material being a formed body of the friction material composition according to any one of aspects 8 to 11.

Aspect 13: A friction member including the friction material according to aspect 12.

### Advantageous Effects of Invention

The present invention enables provision of a friction modifier capable of increasing, when used in a friction material, the coefficient of friction of the friction material in a high-load region, a friction material composition using the friction modifier, a friction material using the friction modifier, and a friction member using the friction modifier. Brief Description of Drawings

[Fig. 1] Fig. 1 is a graph showing the relationship between the number of brakings and the coefficient of friction during brake fade in a fade test for friction members obtained in Example Ex. 3 and Comparative Example CEx. 1.
[Fig. 2]Fig. 2 is a graph showing the relationship between the number of brakings and the coefficient of friction during brake fade in a fade test for friction members obtained in Example Ex. 7 and Comparative Example CEx. 2.
[Fig. 3]Fig. 3 is a graph showing the relationship between the amount of change in coefficient of friction (µ) with the rotor temperature and the average coefficient of friction (µ) during brake fade in a fade test for friction members obtained in Examples, Ex. 1, Ex. 3, and Ex. 5, Comparative Example CEx. 1, and Reference Example REx. 1.

### Description of Embodiments

Hereinafter, a description will be given of an example of a preferred embodiment for working of the present invention. However, the following embodiment is simply illustrative. The present invention is not at all limited by the following embodiment.

### <1. Friction Modifier>

A friction modifier according to the present invention is a friction modifier made of a titanate. The titanate is a salt of at least one element selected from the group consisting of alkali metals and alkaline earth metals.

Alkali metals include lithium, sodium, potassium, rubidium, cesium, and francium. Among them, at least one selected from the group consisting of lithium, sodium, and potassium is preferred as alkali metal from the viewpoint of further increasing the friction and wear properties.

Alkaline earth metals include beryllium, magnesium, calcium, strontium, barium, and radium. Among them, magnesium or calcium is preferred as alkaline earth metal from the viewpoint of further increasing the friction and wear properties.

Specific examples of the above-described titanate include potassium titanate, sodium titanate, potassium lithium titanate, and potassium magnesium titanate. Among them, the titanate is preferably potassium lithium titanate and/or potassium magnesium titanate from the viewpoint of further increasing the wear resistance and further reducing the risk of containing WHO fibers.

In the present invention, the decomposition rate of the titanate when the titanate is heated at 800°C for an hour in a nitrogen atmosphere is not less than 30% by mass and not more than 100% by mass. The decomposition rate of the titanate can be obtained by measuring the content (% by mass) of an undecomposed residue (titanate before being heated) in a powder after heating the titanate at 800°C for an hour in a nitrogen atmosphere and making a calculation using the following equation (1) . Decomposition Rate (% by mass) = 100 - (Content of Undercomposed Residue)

More specifically, the content of the undecomposed titanate residue can be determined by subjecting each of samples before and after the heating at 800°C for an hour in a nitrogen atmosphere to X-ray diffraction measurement.

For example, mixtures obtained by mixing each of the samples before and after the heating with a standard silicon powder are measured in terms of their X-ray diffraction spectra using an X-ray diffraction measurement device. An example of the standard silicon powder that can be used is a silicon powder (with a purity of 99.9%) manufactured by RARE METALLIC Co., Ltd. The mass ratio between the sample (powder) after the heating and the standard silicon powder may be, for example, Sample: Silicon = 1:0.1 to 1:1.

Next, measurement is made of each of the integrated intensities of respective peaks observed at an angle of diffraction 2θ = 10.9° to 11.6° in the obtained X-ray diffraction patterns and derived from the titanate before the heating and the undecomposed titanate residue after the heating and each of the integrated intensities of respective peaks observed at an angle of diffraction 2θ = 28.0° to 28.7° in the obtained X-ray diffraction patterns and derived from the standard silicon powder. Then, the content of the undecomposed titanate residue can be determined, after normalization by the standard silicon powder, from the ratio of the integrated intensity of the peak of the undecomposed titanate residue after the heating to the integrated intensity of the peak of the titanate before the heating.

The X-ray diffraction measurement can be performed by the wide-angle X-ray diffraction method, wherein CuKα rays (with a wavelength of 1.5418 angstroms) can be used. An example of the X-ray diffraction measurement device that can be used is stock number "Ultima IV" manufactured by Rigaku Corporation.

The inventor found that when the decomposition ratio of a titanate in a friction modifier is within the above range and the friction modifier is used in a friction material, the coefficient of friction of the friction material in a high-load region can be increased.

Specifically, it can be believed that when a titanate of which the decomposition rate when heated at 800°C for an hour in a nitrogen atmosphere is within the above range is used as a friction modifier, a titanate having a hollandite crystal structure is formed during high-load friction (in a high-load region). Particles having a hollandite crystal structure are particles harder than those of titanates having the other crystal structures. Therefore, it can be believed that the particles act as an abrasive material during high-load friction and thus increase the coefficient of friction. The nitrogen atmosphere is selected, for example, assuming a state of the interface between a pad and a rotor having friction one with the other (a state where the interface is shut off from oxygen).

In the present invention, the above-described decomposition rate when the titanate is potassium lithium titanate is, from the viewpoint of further increasing the stability of the coefficient of friction, preferably not less than 40% by mass, more preferably not less than 55% by mass, and even more preferably not less than 70% by mass, preferably not more than 95% by mass, and more preferably not more than 89% by mass.

On the other hand, the above-described decomposition rate when the titanate is potassium magnesium titanate is, from the viewpoint of further increasing the stability of the coefficient of friction, preferably not less than 50% by mass, more preferably not less than 65% by mass, and even more preferably not less than 75% by mass, preferably not more than 95% by mass, and more preferably not more than 89% by mass.

In the present invention, the rate of formation of a titanate with a hollandite crystal structure when the above-described titanate is heated at 800°C for an hour in a nitrogen atmosphere is preferably not less than 10% by mass and not more than 100% by mass. This rate of formation can be obtained by measuring the content (% by mass) of a titanate with a hollandite crystal structure in a powder after heating the above-described titanate at 800°C for an hour in a nitrogen atmosphere.

More specifically, the content of a titanate with a hollandite crystal structure can be determined by subjecting the powder after heating the above-described titanate at 800°C for an hour in a nitrogen atmosphere to X-ray diffraction measurement.

For example, a mixture obtained by mixing a sample (powder) after the heating with a standard silicon powder is measured in terms of X-ray diffraction spectrum using an X-ray diffraction measurement device. An example of the standard silicon powder that can be used is a silicon powder (with a purity of 99. 9%) manufactured by RARE METALLIC Co., Ltd. The mass ratio between the sample (powder) after the heating and the standard silicon powder may be 1:0.1 to 1:1.

Next, measurement is made of the integrated intensity of a peak observed at an angle of diffraction 2θ = 10.9° to 11.6° in the obtained X-ray diffraction pattern and derived from the undecomposed residue (titanate before the heating), the integrated intensity of a peak observed at an angle of diffraction 2θ = 27.5° to 28.0° in the X-ray diffraction pattern and derived from the titanate with a hollandite crystal structure, and the integrated intensity of a peak observed at an angle of diffraction 2θ = 28.0° to 28.7° in the X-ray diffraction pattern and derived from the standard silicon powder. Then, the content (% by mass) of the titanate with a hollandite crystal structure can be calculated from previously created calibration curves (a calibration curve of the integrated intensity of the peak derived from the standard silicon powder and a calibration curve of the integrated intensity of the peak derived from the titanate with a hollandite crystal structure).

In the present invention, the rate of formation of a titanate with a hollandite crystal structure when the starting titanate is potassium lithium titanate is, from the viewpoint of further increasing the stability of the coefficient of friction, preferably not less than 20% by mass, more preferably not less than 50% by mass, even more preferably not less than 70% by mass, preferably not more than 90% by mass, and more preferably not more than 80% by mass.

On the other hand, the rate of formation of a titanate with a hollandite crystal structure when the starting titanate is potassium magnesium titanate is, from the viewpoint of further increasing the stability of the coefficient of friction, preferably not less than 15% by mass, more preferably not less than 30% by mass, preferably not more than 90% by mass, more preferably not more than 75% by mass, even more preferably not more than 60% by mass, and particularly preferably not more than 45% by mass.

In the present invention, the titanate is preferably in the form of non-fibrous particles from the viewpoint of working environment. Examples of the non-fibrous particles include spherical particles (inclusive of particles of a spherical shape with some asperities on its surface and particles of an approximately spherical shape, such as those having an elliptic cross-section), bar-like particles (inclusive of particles of an approximately bar-like shape as a whole, such as rodlike, columnar, prismoidal, reed-shaped, approximately columnar, and approximately reed-shaped particles), platy particles, blocky particles, particles of a shape with multiple projections (such as amoeboid, boomerang-like, cross, and kompeito-like), and particles of an irregular shape. Among them, the titanate is preferably in the form of platy particles. Alternatively, the titanate may be in the form of porous particles. These various types of particle shapes can be arbitrarily controlled depending on production conditions, particularly, the composition of raw materials, firing conditions, and so on. The above various types of particle shapes can be analyzed, for example, by observation with a scanning electron microscope (SEM).

The term "non-fibrous particles" herein refers to particles in which L/B is 5 or less where L represents a length which is the longest side of, among cuboids (circumscribing cuboids) circumscribing the particle, a cuboid having the minimum volume, B represents a breadth which is the second longest side of the cuboid, and T represents a thickness which is the shortest side of the cuboid (provided, however, that B > T). The phrase "with multiple projections" herein means that the shape of particles projected onto a plane is different at least from a normal polygon, circle, ellipse, and so on, and the particles can take on a shape having projections in two or more directions. More specifically, the projections correspond to portions projecting from a polygon, circle, ellipse or the like (i.e., a basic shape) applied to a photograph (projected figure) captured by a scanning electron microscope (SEM).

In the present invention, the average particle diameter of the titanate is preferably not less than 0.1 µm, more preferably not less than 1 µm, even more preferably not less than 3 µm, preferably not more than 100 µm, more preferably not more than 50 µm, and even more preferably not more than 30 µm. When the average particle diameter of the titanate is within the above range, the frictional properties when a friction material is fabricated using the titanate can be further increased.

The average particle diameter herein refers to a particle diameter at a volume-based cumulative value of 50% in a particle size distribution measured by the laser diffraction method. This average particle diameter D₅₀ is a particle diameter at a cumulative value of 50% in a cumulative curve of a particle size distribution determined on a volume basis, the cumulative curve assuming the total volume of particles to be 100%, where during accumulation the number of particles is counted from a smaller size side.

In the present invention, the specific surface area of the titanate is preferably not less than 0.1 m²/g, more preferably not less than 0.3 m²/g, even more preferably not less than 0.5 m²/g, preferably not more than 10 m²/g, more preferably not more than 6 m²/g, even more preferably not more than 5 m²/g, and particularly preferably not more than 4 m²/g. The specific surface area of the titanate when the titanate is potassium lithium titanate is preferably not less than 1 m²/g and preferably not more than 3 m²/g. The specific surface area of the titanate when the titanate is potassium magnesium titanate is preferably not less than 2 m²/g and preferably not more than 4 m²/g. When the specific surface area of the titanate is within the above range, the frictional properties when a friction material is fabricated using the titanate can be further increased. The specific surface area can be measured in conformity with JIS Z8830.

In the present invention, the rate of alkali metal ion dissolution of the titanate is preferably not less than 0.01% by mass, more preferably not less than 0.05% by mass, even more preferably not less than 0.1% by mass, preferably not more than 15% by mass, more preferably not more than 10% by mass, and even more preferably not more than 8% by mass.

In the present invention, the rate of alkali metal ion dissolution of the titanate when the titanate is potassium lithium titanate is preferably not less than 1% by mass and preferably not more than 6% by mass. On the other hand, the rate of alkali metal ion dissolution of the titanate when the titanate is potassium magnesium titanate is preferably not less than 0.5% by mass, more preferably not less than 2.6% by mass, preferably not more than 6.0% by mass, and more preferably not more than 3.5% by mass.

In a curing reaction of a novolac phenolic resin as an example of a thermosetting resin for use in the friction material composition, a curing agent (or a curing accelerator), for example, hexamethylenetetramine, opens its ring and binds to a hydroxyl group in the novolac phenolic resin, thus initiating the curing reaction. However, if in doing so alkali metal ions exist, it can be assumed that the alkali metal ions undergo an ion-exchange reaction with hydrogen ions in hydroxyl groups of the novolac phenolic resin to inhibit the binding of hexamethylenetetramine (a curing agent (or a curing accelerator) to the novolac phenolic resin (a thermosetting resin) (cause curing inhibition) . On the other hand, it can be assumed that abrasion failure of the friction material due to braking causes an alkaline component derived from the titanate to be dissolved out on the friction surface.

Therefore, by defining the rate of alkali metal ion dissolution as the above upper limit or less, inhibition of curing of the thermosetting resin during shape forming by the application of heat and pressure can be prevented and, as a result, the crack resistance at high temperature and high load can be further increased. Furthermore, by defining the rate of alkali metal ion dissolution as the above lower limit or more, rust formation on a rotor can be suppressed even when a friction material using the friction modifier according to the present invention is allowed to stand without the use thereof for a long time after braking. In short, by defining the rate of alkali metal ion dissolution within the above range, both the crack resistance of the friction material and the suppression of rust formation of a rotor can be satisfied at a higher level.

The term rate of alkali metal ion dissolution herein refers to the percentage by mass of alkali metal ions dissolved out of a measurement sample of a titanate or others placed in water at 80°C into the water.

In the present invention, treated layers made of a surface treatment agent may be formed on the surfaces of particles of the titanate from the viewpoint of further increasing the adhesion to a binder for use in the friction material composition. Examples of the surface treatment agent include silane coupling agents and titanium coupling agents. Among them, silane coupling agents are preferably used and aminosilane coupling agents, epoxysilane coupling agents, and alkylsilane coupling agents are more preferably used. These surface treatment agents may be used alone or as a mixture of two or more of them.

Examples of the aminosilane coupling agents include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-ethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the epoxysilane coupling agents include 3-glycidyloxypropyl(dimethoxy)methylsilane, 3-glycidyloxypropyltrimethoxysilane, diethoxy(3-glycidyloxypropyl)methylsilane, triethoxy(3-glycidyloxypropyl)silane, and 2-(3,4-epoxycyclohexyl)ethyltrimethoxysilane.

Examples of the alkylsilane coupling agents include methyltrimethoxysilane, dimethyldimethoxysilane, trimethylmethoxysilane, methyltriethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, and n-decyltrimethoxysilane.

Known surface treatment methods can be used as the method for forming treated layers made of a surface treatment agent on the surfaces of particles of the titanate and, for example, the treated layers can be formed by a wet method of dissolving the surface treatment agent in a solvent promoting hydrolysis (for example, water, an alcohol or a mixed solvent of them) to prepare a solution and spraying the solution on the titanate.

The amount of surface treatment agent in treating the surfaces of particles of the titanate with the surface treatment agent is not particularly limited, but, in the case of the wet method, the solution of the surface treatment agent may be sprayed to give, for example, an amount of surface treatment agent of not less than 0.1 parts by mass and not more than 20 parts by mass relative to 100 parts by mass of titanate.

The titanate for use in the present invention can be used also in granular form given by treating the titanate with the above-described surface treatment agent or a binder to be described hereinafter. The average particle diameter of the granular titanate is preferably not less than 100 µm and preferably not more than 200 µm.

The method for producing the titanate for use in the present invention is not particularly limited and, for example, the titanate can be produced by mixing a titanate having a layered crystal structure as a source material (hereinafter, referred to as a source titanate) with an acid (subjecting the source titanate to acid treatment) and firing a compound obtained by the acid treatment.

Examples of the source titanate include titanates described in WO 2002/010069 and WO 2003/037797.

The acid for use in the acid treatment is not particularly limited and known acids can be used. Examples of the acid for use in the acid treatment include inorganic acids, such as sulfuric acid, hydrochloric acid, and nitric acid, and organic acids, such as acetic acid. Any combination of two or more types of acids may be used, if necessary.

The acid treatment can be performed by mixing an acid into an aqueous slurry of a source titanate. The concentration of the aqueous slurry is not particularly limited and can be appropriately selected from a wide range of concentrations. Considering workability and so on, the concentration of the aqueous slurry is sufficient to be about 1% by mass to about 30% by mass. The amount of acid mixed into the aqueous slurry is, for example, preferably 0.01 to 0.5 equivalents relative to interlayer elements of the source titanate.

After the acid treatment, a solid content is separated from the slurry by filtration, centrifugation or other methods. The separated solid content may be, if necessary, washed with water and dried.

The firing can be performed using an electric furnace or the like and the compound is held, for example, at 100°C to 600°C, preferably held within a temperature range of 400°C to 600°C for an hour to twelve hours, and more preferably for an hour to ten hours. After the firing, the obtained powder may be ground to a desired size or de-agglomerated by passing it through a sieve. In the manner described thus far, the titanate for use in the present invention can be obtained.

The titanate prepared by the above method can increase the above-described decomposition rate of the titanate in a high-temperature nitrogen atmosphere and can easily produce a titanate with a hollandite crystal structure in the high-temperature nitrogen atmosphere, but can be believed to produce an adequate amount of titanate with a hollandite crystal structure without excessive titanate decomposition and excessive production of a titanate with a hollandite crystal structure.

<2. Friction Material Composition>

A friction material composition according to the present invention contains the friction modifier according to the present invention and a binder, wherein the content of copper component is less than 0.5% by mass in terms of copper element. If necessary, the friction material composition according to the present invention may further contain other materials. The term "friction material composition" herein refers to a composition for use in a friction material.

Since the friction material composition according to the present invention contains the above-described friction modifier according to the present invention, it can increase the coefficient of friction of a friction material in a high-load region.

Furthermore, when the friction material composition contains less than 0.5% by mass copper component in terms of copper element relative to a total amount of 100% by mass of the friction material composition or is preferably free of copper component, the friction material composition can reduce environmental load compared to conventional friction material compositions. The term "free of copper component" herein means that the friction material composition contains as raw and processed material none of copper fibers, copper powder, a copper-containing alloy (such as brass or bronze), and a copper compound.

Even when being free of copper component or having a small content of copper component, the friction material composition according to the present invention can obtain excellent frictional properties.

The friction material composition according to the present invention is preferably a NAO material in which the content of steel-based fibers, such as steel fibers or stainless steel fibers, is less than 10% by mass relative to a total amount of 100% by mass of the friction material composition. In this case, the friction material composition can easily form a transfer film on the surface of a counter-member and, thus, can obtain excellent friction and wear properties.

### (2-1. Binder)

The binder binds together mixed materials contained in the friction material composition to give the friction material composition strength. The type of the binder for use in the friction material composition according to the present invention is not particularly limited and any thermosetting resin commonly used as a binder for a friction material can be used.

Examples of the thermosetting resin include: phenolic resins; elastomer-dispersed phenolic resins, such as acrylic elastomer-dispersed phenolic resins and silicone elastomer-dispersed phenolic resins; modified phenolic resins, such as acrylic-modified phenolic resins, silicone-modified phenolic resins, cashew-modified phenolic resin, epoxy-modified phenolic resin, and alkyl benzene-modified phenolic resin; formaldehyde resins; melamine resins; epoxy resins; acrylic resins; aromatic polyester resins; and urea resins. These thermosetting resins may be used singly or in combination of two or more of them. Among them, phenolic resin (straight phenolic resin) or modified phenolic resin is preferred as the thermosetting resin from the viewpoint of further increasing the thermal resistance, the formability, and the frictional properties. Both resole phenolic resin and novolac phenolic resin can be used as the phenolic resin, but novolac phenolic resin is preferred from the viewpoint of the production stability and cost. The novolac phenolic resin may contain, if necessary, an additive, such as a curing agent or a curing accelerator (for example, hexamethylenetetramine).

The content of the binder in the friction material composition is preferably not less than 5% by mass, more preferably not less than 8% by mass, preferably not more than 30% by mass, and more preferably not more than 20% by mass relative to a total amount of 100% by mass of the friction material composition. By defining the content of the binder within the above range, spaces between the mixed materials are filled with a suitable amount of binder, which enables the friction material composition to achieve more excellent frictional properties.

### (2-2. Titanate)

The titanate for use in the friction material composition according to the present invention constitutes the above-described friction modifier according to the present invention. The content of the titanate in the friction material composition is preferably not less than 1% by mass, more preferably not less than 5% by mass, even more preferably not less than 10% by mass, preferably not more than 40% by mass, more preferably not more than 35% by mass, and even more preferably not more than 30% by mass relative to a total amount of 100% by mass of the friction material composition. By defining the content of the titanate within the above range, the friction material composition can achieve more excellent frictional properties.

The mass ratio of the titanate to the binder (titanate/binder) is preferably not less than 0.1, more preferably not less than 0.5, even more preferably not less than 1.1, preferably not more than 8, more preferably not more than 6, and even more preferably not more than 4. By defining the mass ratio of the titanate to the binder within the above range, the formability of a friction material can be further increased and a suitable transfer film can be formed.

### (2-3. Other Materials)

The friction material composition according to the present invention may contain, if necessary, in addition to the binder and the friction modifier according to the present invention, other materials (a fibrous base material, an organic friction modifier, an inorganic friction modifier, a lubricant, a pH adjuster, a filler and/or so on) commonly used in a friction material composition.

The content of the other materials in the friction material composition is preferably not less than 30% by mass and preferably not more than 94% by mass relative to a total amount of 100% by mass of the friction material composition.

### (2-3-1. Fibrous Base Material)

The fibrous base material exhibits reinforceability in a friction material. Examples of the fibrous base material include inorganic fibers, metallic fibers, organic fibers, and carbon-based fibers. These types of fibrous base materials may be used singly or in combination of two or more of them.

Examples of the inorganic fibers include glass fibers, rock wool, ceramic fibers, biodegradable ceramic fibers, biodegradable mineral fibers, biosoluble fibers (such as SiO₂-CaO-SrO-based fibers), wollastonite fibers, silicate fibers, and mineral fibers and, among them, rock wool is preferred.

When rock wool is contained in the friction material composition, the content thereof is preferably not less than 1% by mass, preferably not more than 10% by mass, and more preferably not more than 7% by mass relative to a total amount of 100% by mass of the friction material composition. When the content of rock wool is within the above range, the coefficient of friction can be further increased at high-load braking.

Examples of the metallic fibers include straight or curled metallic fibers consisting primarily of metal, such as fibers made of a metal alone or in an alloy form of aluminum, iron, zinc, tin, titanium, nickel, magnesium, silicon or other metals (for example, steel fibers or stainless steel fibers), and cast iron fibers.

Examples of the organic fibers include aromatic polyamide (aramid) fibers, fibrillated aramid fibers (aramid pulp), acrylic fibers (homopolymeric or copolymeric fibers made mainly from acrylonitrile), fibrillated acrylic fibers, cellulose fibers, fibrillated cellulose fibers, and phenolic resin fibers.

The preferred organic fibers are aramid fibers because a friction material is given a moderate water absorbability to make moisture in the air easily absorbed inside the friction material and make the alkaline component in the titanate easily dissolved out of the friction material to provide a promising effect of preventing rust formation on a rotor. Furthermore, from the viewpoint of further increasing the formability of the friction material and further increasing the retainability of a filler, the preferred organic fibers are fibrillated aramid fibers (referred to also as aramid pulp). The specific surface area of the fibrillated aramid fibers is preferably not less than 5 m²/g, preferably not more than 25 m²/g, and more preferably not more than 15 m²/g. The fiber length of the fibrillated aramid fibers is preferably not less than 0.5 mm and preferably not more than 1.2 mm.

When fibrillated aramid fibers are contained in the friction material composition, the content thereof is preferably not less than 1% by mass, preferably not more than 10% by mass, more preferably not more than 8% by mass, and even more preferably not more than 6% by mass relative to a total amount of 100% by mass of the friction material composition. When the content of fibrillated aramid fibers is the above lower limit or more, the crack resistance and the wear resistance become better. When the content of fibrillated aramid fibers is the above upper limit or less, deterioration in crack resistance and wear resistance due to uneven distribution of the fibrillated aramid fibers relative to the other materials can be more certainly prevented.

Examples of the carbon-based fibers include flame-resistant fibers, PAN-based carbon fibers, pitch-based carbon fibers, and activated carbon fibers.

### (2-3-2. Organic Friction Modifier)

The organic friction modifier is a friction modifier incorporated into the composition for the purpose of further improving a friction material in terms of effectiveness against noise and vibration and wear resistance. Examples of the organic friction modifier include: unvulcanized or vulcanized rubber powders, such as tire rubber, acrylic rubber, isoprene rubber, NBR (nitrile-butadiene rubber), SBR (styrene-butadiene rubber), chlorinated butyl rubber, butyl rubber, and silicone rubber; cashew dust; rubber-coated cashew dust; and melamine dust. These organic fiction modifiers may be used singly or in combination of two or more of them.

When an organic friction modifier is contained in the friction material composition, the content thereof is preferably not less than 0.1% by mass, preferably not more than 30% by mass, more preferably not more than 20% by mass, even more preferably not more than 10% by mass, and particularly preferably not more than 6% by mass relative to a total amount of 100% by mass of the friction material composition.

### (2-3-3. Inorganic Friction Modifier)

The inorganic friction modifier (except for the above-described titanate) is a friction modifier incorporated into the composition for the purpose of avoiding deterioration in thermal resistance of a friction material or further improving the wear resistance or further increasing the coefficient of friction. Examples of the inorganic friction modifier include an abrasive material, metallic powder, and other inorganic fillers.

As the abrasive material, a material that acts as an abrasive material depending on the material of a rotor as a counter-member to increase the coefficient of friction can be appropriately selected. The abrasive material may be selected on the basis of the Mohs hardness of the counter-member. From the viewpoint of making the abrasive material more effectively develop the coefficient of friction, the Mohs hardness of the abrasive material is preferably not less than 6 and preferably not more than 8.

Examples of the abrasive material include silicon carbide, titanium oxide, α-alumina, γ-alumina, silica (silicon dioxide), magnesia (magnesium oxide), zirconia (zirconium oxide), zircon (zirconium silicate), chromium oxide, iron oxide (such as triiron tetroxide), chromite, quartz, and iron sulfide. Among them, zirconia (zirconium oxide) and zircon (zirconium silicate) are preferred. The average particle diameter of zirconia (zirconium oxide) is preferably 1 µm to 14 µm. The average particle diameter of zircon (zirconium silicate) is preferably 0.2 µm to 2 µm.

When an abrasive material is contained in the friction material composition, the content thereof is preferably not less than 0.1% by mass, more preferably not less than 5% by mass, preferably not more than 30% by mass, more preferably not more than 25% by mass, and even more preferably not more than 18% by mass relative to a total amount of 100% by mass of the friction material composition.

Examples of the metallic powder include metallic powders made of a metal alone or in an alloy form of aluminum, zinc, iron, tin or other metals. These types of metallic powders may be used singly or in combination of two or more of them.

Examples of the other inorganic fillers include vermiculite, clay, mica, talc, dolomite, chromite, mullite, calcium silicate, and titanates other than the above-described titanate (hereinafter, referred to as "the other titanates"). These types of inorganic fillers may be used singly or in combination of two or more of them.

Examples of the other titanates that can be used include: potassium hexatitanate, such as TERRACESS JSL, TERRACESS JSL-R, TERRACESS DP-R, TERRACESS DP-A, and TERRACESS DP-AS each manufactured by Otsuka Chemical Co., Ltd., TXAX-MA and TXAX-A each manufactured by Kubota Corporation, and TOFIX-S and TOFIX-SNR each manufactured by Toho Titanium Co., Ltd.; sodium hexatitanate, such as TERRACESS DSR manufactured by Otsuka Chemical Co., Ltd.; potassium octatitanate, such as TERRACESS TF-SS, TERRACESS TF-S, TERRACESS TF-L, and TERRACESS JP each manufactured by Otsuka Chemical Co., Ltd.; potassium magnesium titanate, such as TERRACESS PM and TERRACESS PS each manufactured by Otsuka Chemical Co., Ltd.; and potassium lithium titanate, such as TERRACESS L, TERRACESS L-SS, and TERRACESS JSM-M each manufactured by Otsuka Chemical Co., Ltd. The preferred other titanates are sodium hexatitanate, potassium octatitanate, potassium magnesium titanate, and potassium lithium titanate.

When the other titanate is contained in the friction material composition, the mass ratio of the other titanate to the friction modifier according to the present invention (the other titanate to the friction modifier according to the present invention) is preferably not less than 0.1 and preferably not more than 3 from the viewpoint of the coefficient of friction in a high-load region.

### (2-3-4. Lubricant)

The preferred lubricant is a solid lubricant and examples of the solid lubricant include a carbon-based lubricant, a metal sulfide-based lubricant, and polytetrafluoroethylene (PTFE). These types of lubricants may be used singly or in combination of two or more of them. The lubricant is preferably at least one selected from the group consisting of carbon-based lubricants and metal sulfide-based lubricants.

When a lubricant is contained in the friction material composition, the content thereof is preferably not less than 0.1% by mass, more preferably not less than 1% by mass, preferably not more than 20% by mass, more preferably not more than 10% by mass, and even more preferably not more than 5% by mass relative to a total amount of 100% by mass of the friction material composition.

Examples of the above carbon-based lubricant include synthetic or natural graphite, flake graphite, phosphate-coated graphite, carbon black, coke, activated carbon, and elastic graphitized carbon. Synthetic graphite and natural graphite are preferred from the viewpoint of more certainly giving thermal conductivity. Examples of the above metal sulfide-based solid lubricant include antimony trisulfide, molybdenum disulfide, tin sulfide, iron sulfide, zinc sulfide, bismuth sulfide, tungsten disulfide. Tin sulfide and molybdenum disulfide are preferred from the viewpoint of less harmfulness to humans.

### (2-3-5. pH Adjuster)

Examples of the pH adjuster include: inorganic bases, such as calcium hydroxide (hydrated lime), sodium hydroxide, potassium hydroxide, sodium carbonate, potassium carbonate, sodium hydrogen carbonate, potassium hydrogen carbonate, trisodium phosphate, disodium hydrogen phosphate, tripotassium phosphate, and dipotassium hydrogen phosphate; organic bases, such as imidazole, histidine, and hexamethylenediamine. The preferred pH adjuster is an inorganic base from the viewpoint of cost and moisture absorbency. These pH adjusters may be used singly or in combination of two or more of them. The pH adjuster may be used to prevent the friction material and its counter-member (a rotor) from sticking together by rust.

When a pH adjuster is contained in the friction material composition, the content thereof is preferably not less than 0.1% by mass and preferably not more than 8% by mass relative to a total amount of 100% by mass of the friction material composition.

### (2-3-6. Filler)

Examples of the filler include barium sulfate and calcium carbonate. Preferably, barium sulfate can be used as the filler. These fillers may be used singly or in combination of two or more of them.

Barium sulfate includes: ground barium sulfate (barite powder) obtained by grinding a mineral called barite, deironing the ground product, and elutriating it; and precipitated barium sulfate obtained by artificial synthesis. Precipitated barium sulfate can be controlled in particle size depending on conditions during synthesis. Thus, desired fine-grained barium sulfate containing only a small amount of coarse particles can be produced. From the viewpoint of further reducing impurities and further homogenizing the particle size distribution of barium sulfate particles, precipitated barium sulfate is preferably used.

### (2-4. Method for Producing Friction Material Composition)

The friction material composition according to the present invention can be produced by, for example, (1) the method of mixing components with a mixer, such as a Lodige mixer ("Lodige" is a registered mark), a pressure kneader or an Eirich mixer ("Eirich" is a registered mark), or (2) the method of preparing a granulated material of desired components and, if necessary, mixing it together with other components using a mixer, such as a Lodige mixer, a pressure kneader or an Eirich mixer.

The content of each component in the friction material composition according to the present invention can be appropriately selected depending on the desired frictional properties and the friction material composition can be produced by the above-described production methods.

Alternatively, the friction material composition according to the present invention may be prepared by producing a master batch containing a particular component at a high concentration, adding a thermosetting resin and so on to the master batch, and mixing them.

<3. Friction Material and Friction Member>

In the present invention, a friction material having a predetermined shape can be produced by preliminarily forming the above friction material composition at ordinary temperature (20°C), forming the resultant preform by the application of heat and pressure (at a forming pressure of 10 MPa to 40 MPa and a forming temperature of 150°C to 200°C), subjecting, if necessary, the resultant formed body to heat treatment (holding it at 150°C to 220°C for 1 hour to 12 hours) in a furnace, and then subjecting the formed body to machining and polishing processes.

The friction material according to the present invention is used as a friction member formed to allow its friction surface to be provided by the friction material. Examples of a friction member formable using the friction material include: (1) a structure composed of the friction material alone; and (2) a structure including a substrate, such as a back metal, and the friction material according to the present invention provided on the substrate and providing a friction surface.

The substrate is used in order to further increase the mechanical strength of the friction member. Examples of the material for the substrate include metal and a fiber-reinforced resin. Examples of the metal or the fiber-reinforced resin include iron, stainless steel, glass fiber-reinforced resin, and carbon fiber-reinforced resin.

A friction material generally has a large number of microscopic pores formed inside thereof and these pores serve as escape routes for decomposition products (gaseous and liquid substances) at high temperatures to prevent reduction in frictional properties and concurrently reduce the stiffness of the friction material and increase the damping performance thereof, thus preventing the occurrence of squeal. In a normal friction material, the mixing and shape forming conditions of the materials are controlled to give a porosity of preferably 5% to 30% and more preferably 10% to 25%.

Since the friction member according to the present invention is formed of the above-described friction material composition according to the present invention, the friction member can obtain excellent frictional properties although being free of copper component or having a small content of copper component. Therefore, the friction member according to the present invention can be suitably used in all braking systems for various types of vehicles, industrial machines, and so on, such as a disc pad or a brake lining each constituting part of a braking device or a clutch facing, and can be suitably used particularly as a friction member for a regenerative braking system.

### Examples

The present invention will be described below in further detail with reference to specific examples.

The present invention is not at all limited by the following examples and modifications and variations may be appropriately made therein without changing the gist of the invention.

### <Production of Titanate>

### (Synthesis Example 1)

A 20% by mass aqueous slurry of potassium magnesium titanate (KTMO, trade name TERRACESS PM manufactured by Otsuka Chemical Co., Ltd.) was prepared, 0.34 equivalents of sulfuric acid relative to potassium in the potassium magnesium titanate was mixed into the aqueous slurry, and the mixture was stirred at ordinary temperature (20°C) for two hours. The aqueous slurry was filtered by suction and washed with deionized water, and the separated cake (solid content) was dried at 110°C for 12 hours, fired at 500°C for an hour in an electric furnace, and slowly cooled, and the obtained fired product was passed through a 20-mesh sieve, thus obtaining desired Titanate 1.

### (Synthesis Example 2)

Titanate 2 was obtained in the same manner as in Synthesis Example 1 except that the equivalent amount of sulfuric acid was changed to 0.27 equivalents and the firing time was changed to 12 hours.

### (Synthesis Example 3)

Titanate 3 was obtained in the same manner as in Synthesis Example 1 except that the equivalent amount of sulfuric acid was changed to 0.27 equivalents.

### (Synthesis Example 4)

Titanate 4 was obtained in the same manner as in Synthesis Example 1 except that the equivalent amount of sulfuric acid was changed to 0.22 equivalents.

### (Synthesis Example 3)

Titanate 5 was obtained in the same manner as in Synthesis Example 1 except that the equivalent amount of sulfuric acid was changed to 0.16 equivalents.

### (Synthesis Example 6)

Potassium magnesium titanate (KTMO, trade name TERRACESS PM manufactured by Otsuka Chemical Co., Ltd.) was directly used as Titanate 6.

### (Synthesis Example 7)

A 20% by mass aqueous slurry of potassium lithium titanate (KTLO, trade name TERRACESS L manufactured by Otsuka Chemical Co., Ltd.) was prepared, 0.24 equivalents of sulfuric acid relative to potassium in the potassium lithium titanate was mixed into the aqueous slurry, and the mixture was stirred at ordinary temperature (20°C) for two hours. The aqueous slurry was filtered by suction and washed with deionized water, and the separated cake (solid content) was dried at 110°C for 12 hours, fired at 500°C for an hour in an electric furnace, and slowly cooled, and the obtained fired product was passed through a 20-mesh sieve, thus obtaining desired Titanate 7.

### (Synthesis Example 8)

Titanate 8 was obtained in the same manner as in Synthesis Example 7 except that the equivalent amount of sulfuric acid was changed to 0.19 equivalents.

### (Synthesis Example 9)

Titanate 9 was obtained in the same manner as in Synthesis Example 7 except that the equivalent amount of sulfuric acid was changed to 0.05 equivalents.

### (Synthesis Example 10)

Potassium lithium titanate (KTLO, trade name TERRACESS L manufactured by Otsuka Chemical Co., Ltd.) was directly used as Titanate 10.

### <Measurement of Physical Properties of Titanates>

The physical properties of Titanates 1 to 10 were measured in the following manners. The results are shown in Table 1.

### (Heating Test)

An amount of 3 g of each sample was put into an alumina core tube under a nitrogen atmosphere and heated at 800°C for an hour using an electric tubular furnace. A mixture obtained by mixing 1 g of the sample after the heating with 0.5 g of standard silicon powder (silicon powder (with a purity of 99.9%) manufactured by RARE METALLIC Co., Ltd.) was measured in terms of X-ray diffraction spectrum using an X-ray diffraction measurement device (stock number "Ultima IV" manufactured by Rigaku Corporation). Measurement was made of the integrated intensity of a peak observed at an angle of diffraction 2θ = 10.9° to 11.6° in an obtained X-ray diffraction pattern and derived from the undecomposed residue (titanate before the heating), the integrated intensity of a peak observed at an angle of diffraction 2θ = 27.5° to 28.0° in the X-ray diffraction pattern and derived from a titanate with a hollandite crystal structure, and the integrated intensity of a peak observed at an angle of diffraction 2θ = 28.0° to 28.7° in the X-ray diffraction pattern and derived from the standard silicon powder. Then, the respective contents (% by mass) of the undecomposed residue (the titanate before the heating) and the titanate with a hollandite crystal structure were calculated from previously created calibration curves. Furthermore, the decomposition rate of the titanate and the rate of formation of a titanate with a hollandite crystal structure were determined.

### (Average Particle Diameter)

The particle diameter was measured with a laser diffraction particle size distribution measurement device (stock number "SALD-2300" manufactured by Shimadzu Corporation) and the particle diameter at a volume-based cumulative value of 50% in the obtained particle size distribution was selected as the average particle diameter.

### (Specific Surface Area)

The specific surface area was measured with an automatic specific surface area measurement device (stock number "TriStar II 3020" manufactured by Micromeritics Instrument Corporation).

### (Particle Shape)

The particle shape was confirmed with a field-emission scanning electron microscope (stock number "S-4800" manufactured by Hitachi High-Tech Corporation).

### (Rate of Alkali Metal Ion Dissolution)

The mass (X) g of the sample was measured, the sample was then added into ultrapure water to prepare a 1% by mass slurry, the slurry was stirred at 80°C for four hours, and a solid content was then removed from the slurry with a membrane filter having a pore size of 0.2 µm, thus obtaining an extraction liquid. The mass (Y) g of alkali metal ions in the obtained extraction liquid was measured with an ion chromatograph (stock number "ICS-1100" manufactured by Dionex). Subsequently, using the values of the above masses (X) g and (Y) g, the rate of alkali metal ion dissolution (% by mass) was calculated based on the formula [(Y)/(X)] × 100.

**[Table 1]**

| | Physical Properties of Titanates | | | | | | | |
|---|---|---|---|---|---|---|---|---|
| | Name of Material | After Heating at 800°C for 1h in Nitrogen Atm. | | | Average Particle Diameter [*µ*m] | Specific Surface Area [m²/g] | Particle Shape | Rate of Alkali Metal Ion Dissolution [% by mass] |
| | | Decomposition Rate [% by mass] | Product | | | | | |
| | | | Hollandite Type [% by mass] | Others [% by mass] | | | | |
| Titanate 1 | Potassium magnesium titanate | 100 | 67 | 33 | 6.0 | 4.47 | platy | 0.60 |
| Titanate 2 | Potassium magnesium titanate | 90 | 46 | 44 | 6.2 | 4.20 | platy | 1.97 |
| Titanate 3 | Potassium magnesium titanate | 81 | 36 | 45 | 6.1 | 3.62 | platy | 0.65 |
| Titanate 4 | Potassium magnesium titanate | 73 | 18 | 55 | 6.0 | 3.14 | platy | 1.55 |
| Titanate 5 | Potassium magnesium titanate | 58 | 16 | 42 | 6.0 | 2.66 | platy | 3.30 |
| Titanate 6 | Potassium magnesium titanate | 0 | 0 | 0 | 6.9 | 1.26 | platy | 3.60 |
| Titanate 7 | Potassium lithium titanate | 100 | 99 | 1 | 16.0 | 2.08 | platy | 1.44 |
| Titanate 8 | Potassium lithium titanate | 85 | 71 | 14 | 16.3 | 1.49 | platy | 1.59 |
| Titanate 9 | Potassium lithium titanate | 37 | 32 | 5 | 16.2 | 1.21 | platy | 2.23 |
| Titanate 10 | Potassium lithium titanate | 0 | 0 | 0 | 16.4 | 0.81 | platy | 2.10 |

### <Production of Friction Member>

### (Examples Ex. 1 to Ex. 14, Comparative Examples CEx. 1 to CEx. 2, and Reference Example REx. 1)

Materials were compounded at each compounding ratio described in Tables 2 and 3 and mixed for three minutes with an Eirich mixer. A pressure of 15 MPa was applied to the obtained mixture at ordinary temperature (20°C) for five seconds, thus preparing a preform. The preform was inserted into a cavity of a hot forming die heated to 150°C and the preform with a back plate (material: steel) placed thereon was pressurized at 10 MPa to 40 MPa for 300 seconds to give a porosity of 15% in a resultant formed body. A degassing process was performed five times between after 5 seconds and after 70 seconds counted from the start of the pressurization. The obtained formed body was put into a thermostatic oven heated to 220°C and held for two hours therein to completely cure it, thus obtaining a friction member. Except for Titanates 1 to 10, the following materials shown in Tables 2 and 3 were used.

### (Titanate 11)

Titanate 11: Potassium hexatitanate (6KT), bar-like particles, average length of 65 µm, average breadth of 13 µm

### (Titanate 12)

Titanate 12: Sodium hexatitanate, porous spherical particles, average particle diameter of 21.2 µm, manufactured by Otsuka Chemical Co., Ltd. (trade name TERRACESS DSR)

### (Titanate 13)

Titanate 13: Potassium hexatitanate, porous spherical particles, average particle diameter of 60.1 µm, manufactured by Otsuka Chemical Co., Ltd. (trade name TERRACESS DP-AS)

### (Titanate 14)

Titanate 14: Potassium hexatitanate, bar-like particles, average particle diameter of 36 µm, manufactured by Otsuka Chemical Co., Ltd. (trade name TERRACESS JSL)

### (Binder)

Phenolic resin: Hexamethylenetetramine-containing novolac phenolic resin powder

### (Other Materials)

Barium sulfate: average particle diameter of 1.6 µm
Natural mica: average particle diameter of 180 µm
Cashew dust: average particle diameter of 200 µm
Iron oxide: average particle diameter of 0.3 µm, Mohs hardness of 6
Zirconium silicate: average particle diameter of 1.1 µm, Mohs hardness of 7.5
Antimony trisulfide: average particle diameter of 1.5 µm
Synthetic graphite: average particle diameter of 730 µm
Aramid fibers: fibrillated para-aramid fibers (aramid pulp), fiber length of 0.89 mm, specific surface area of 9.8 m²/g
Hydrated lime: average particle diameter of 0.2 µm
Rock wool: average fiber length of 125 µm, maximum content of shot (not less than 125 µm) of 5.0%

### <Evaluations of Friction Member>

The Rockwell hardness and fade test for each of the friction members produced in the above manners were evaluated in the following manners.

### (Rockwell Hardness)

The Rockwell hardness of the surface of each friction member was measured in conformity with the method defined in JIS D4421. S scale was used as a scale for hardness. The results are shown in Table 2 below.

### (Fade Test)

The surface (friction surface) of the friction member was polished 1.0 mm and the friction member was then subjected to a braking efficacy test based on JASO C406. However, the braking efficacy test was performed by changing the speed condition of the first fade test to a speed of 160 km/h with the assumption of a high-load condition. A cast-iron rotor belonging to Standard No. A48/A48M in the ASTM standard was used as the rotor.

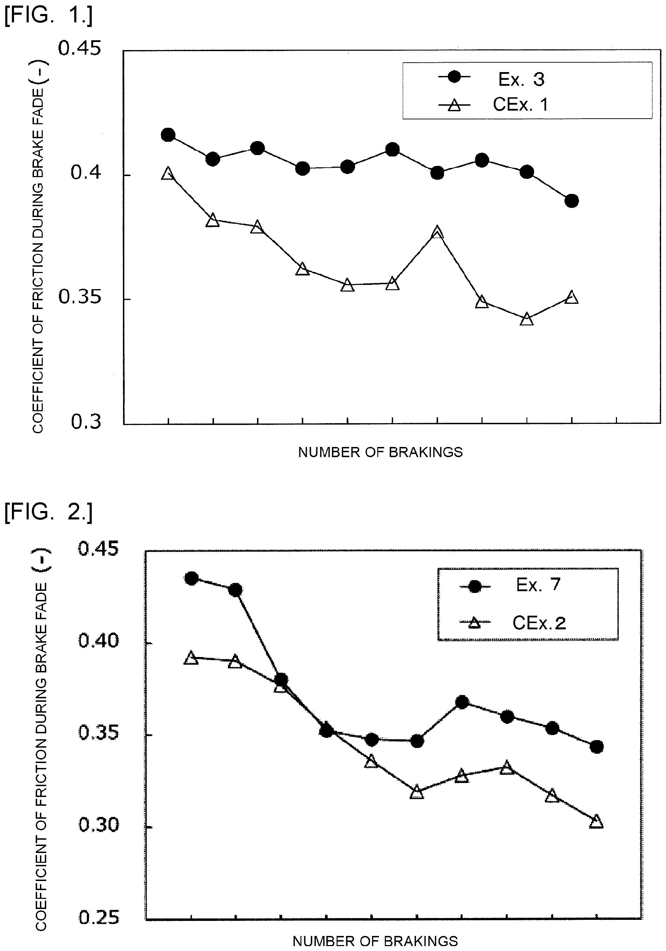

Fig. 1 is a graph showing the relationship between the number of brakings and the coefficient of friction during brake fade in a fade test for friction members obtained in Example Ex. 3 and Comparative Example CEx. 1.

Fig. 1 shows that Example Ex. 3 in which potassium magnesium titanate having a decomposition rate of 30% or more was used exhibited a higher coefficient of friction in a high-load region and more excellent stability of the coefficient of friction compared to Comparative Example CEx. 1 in which potassium magnesium titanate having a decomposition rate of less than 30% was used.

Fig. 2 is a graph showing the relationship between the number of brakings and the coefficient of friction during brake fade in a fade test for friction members obtained in Example Ex. 7 and Comparative Example CEx. 2.

Fig. 2 shows that Example Ex. 7 in which potassium lithium titanate having a decomposition rate of 30% or more was used exhibited a higher coefficient of friction in a high-load region and more excellent stability of the coefficient of friction compared to Comparative Example CEx. 2 in which potassium lithium titanate having a decomposition rate of less than 30% was used.

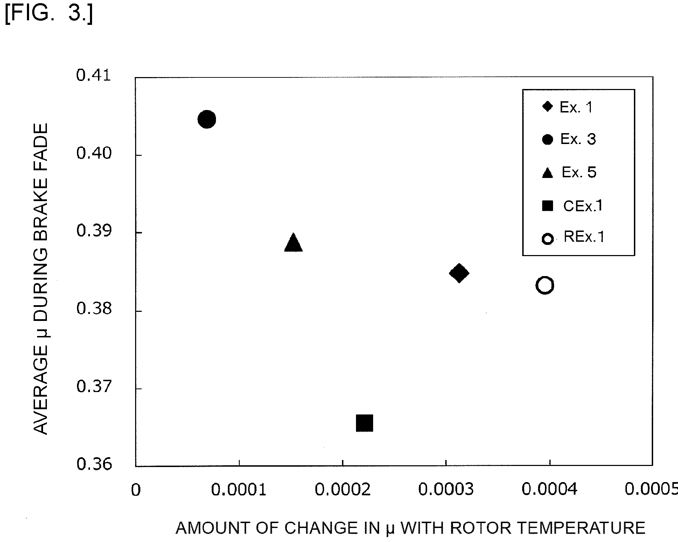

Fig. 3 is a graph showing the relationship between the amount of change in coefficient of friction (µ) with the rotor temperature and the average coefficient of friction (µ) during brake fade in a fade test for friction members obtained in Examples, Ex. 1, Ex. 3, and Ex. 5, Comparative Example CEx. 1, and Reference Example REx. 1. The average coefficient of friction (µ) during brake fade was determined from an average value (average µ) of coefficients of friction at ten brakings in the first fade test results.

Fig. 3 shows that Examples Ex. 1, Ex. 3, and Ex. 5 in which potassium magnesium titanate having a decomposition rate of 30% or more was used exhibited an equivalent or higher coefficient of friction and increased the stability of the coefficient of friction even compared to Reference Example REx. 1 in which potassium hexatitanate was used.

In relation to all Examples, Comparative Examples, and Reference Example, based on the test results, the average value (average µ) of coefficients of friction at ten brakings in the first fade test results and Δµ (maximum - minimum) as a difference between the maximum µ and the minimum µ during the first fade were determined. The results are shown in Tables 2 and 3 below.

**[Table 2]**

| | | | Ex.1 | Ex.2 | Ex.3 | Ex.4 | Ex.5 | Ex.6 | CEx.1 | Ex.7 | Ex.8 | Ex.9 | CEx.2 | REx. 1 |
|---|---|---|---|---|---|---|---|---|---|---|---|---|---|---|
| | Binder | Phenolic resin | 9.4 | 9.4 | 9.4 | 9.4 | 9.4 | 9.4 | 9.4 | 9.4 | 9.4 | 9.4 | 9.4 | 9.4 |
| | Titanate | Titanate 1 | 18.5 | | | | | | | | | | | |
| | | Titanate 2 | | 18.5 | | | | | | | | | | |
| | | Titanate 3 | | | 18.5 | 9.3 | | | | | | | | |
| | | Titanate 4 | | | | | 18.5 | | | | | | | |
| | | Titanate 5 | | | | | | 18.5 | | | | | | |
| | | Titanate 6 | | | | | | | 18.5 | | | | | |
| | | Titanate 7 | | | | | | | | | | | | |
| | | Titanate 8 | | | | | | | | | 18.5 | | | |
| | | Titanate 9 | | | | | | | | 18.5 | | 18.5 | | |
| Composition of | | Titanate 10 | | | | | | | | | | | 18.5 | |
| Friction Material [% by mass] | | Titanate 11 | | | | | | | | | | | | 18.5 |
| | Other Materials | Barium sulfate | 31.3 | 31.3 | 31.3 | 40.5 | 31.3 | 31.3 | 31.3 | 31.3 | 31.3 | 31.3 | 31.3 | 31.3 |
| | | Natural mica | 5.1 | 5.1 | 5.1 | 5.1 | 5.1 | 5.1 | 5.1 | 5.1 | 5.1 | 5.1 | 5.1 | 5.1 |
| | | Cashew dust | 5.4 | 5.4 | 5.4 | 5.4 | 5.4 | 5.4 | 5.4 | 5.4 | 5.4 | 5.4 | 5.4 | 5.4 |
| | | Iron oxide | 9.3 | 9.3 | 9.3 | 9.3 | 9.3 | 9.3 | 9.3 | 9.3 | 9.3 | 9.3 | 9.3 | 9.3 |
| | | Zirconium silicate | 8.5 | 8.5 | 8.5 | 8.5 | 8.5 | 8.5 | 8.5 | 8.5 | 8.5 | 8.5 | 8.5 | 8.5 |
| | | Antimony trisulfide | 1.8 | 1.8 | 1.8 | 1.8 | 1.8 | 1.8 | 1.8 | 1.8 | 1.8 | 1.8 | 1.8 | 1.8 |
| | | Synthetic graphite | 1.5 | 1.5 | 1.5 | 1.5 | 1.5 | 1.5 | 1.5 | 1.5 | 1.5 | 1.5 | 1.5 | 1.5 |
| | | Aramid fibers | 2.5 | 2.5 | 2.5 | 2.5 | 2.5 | 2.5 | 2.5 | 2.5 | 2.5 | 2.5 | 2.5 | 2.5 |
| | | Hydrated Lime | 1.8 | 1.6 | 1.6 | 1.6 | 1.6 | 1.6 | 1.6 | 1.6 | 1.8 | 1.8 | 1.6 | 1.6 |
| | | Rock wool | 5.1 | 5.1 | 5.1 | 5.1 | 5.1 | 5.1 | 5.1 | 5.1 | 5.1 | 5.1 | 5.1 | 5.1 |
| Copper Content in Terms of Copper Element (% by mass) | | | 0 | 0 | 0 | 0 | 0 | 0 | 0 | 0 | 0 | 0 | 0 | 0 |
| Mass Ratio of Titanate to Binder (Titanate/Binder) | | | 2.0 | 2.0 | 2.0 | 1.0 | 2.0 | 2.0 | 2.0 | 2.0 | 2.0 | 2.0 | 2.0 | 2.0 |
| Name of Material of Titanate | | | KTMO | KTMO | KTMO | KTMO | KTMO | KTMO | KTMO | KTLO | KTLO | KTLO | KTLO | 6KT |
| Decomposition Rate of Titanate (% by mass) | | | 100 | 90 | 81 | 81 | 73 | 58 | 0 | 100 | 85 | 37 | 0 | 0 |
| Evaluations of Friction Member | Rockwell Hardness | | 57 | 54 | 55 | 50 | 55 | 65 | 48 | 68 | 63 | 67 | 67 | 81 |
| | Fade Test | Average *µ* | 0.385 | 0.400 | 0.405 | 0.402 | 0.389 | 0.380 | 0.365 | 0.372 | 0.373 | 0.370 | 0.345 | 0.383 |
| | | Δ *µ* (Maximum - Minimum) | 0.09 | 0.05 | 0.03 | 0.07 | 0.04 | 0.05 | 0.08 | 0.08 | 0.06 | 0.08 | 0.09 | 0.10 |

**[Table 3]**

| | | | Ex.10 | Ex.11 | Ex.12 | Ex.13 | Ex.14 | CEx.1 |
|---|---|---|---|---|---|---|---|---|
| Composition of Friction Material [% by mass) | Binder | Phenolic resin | 9.4 | 9.4 | 9.4 | 9.4 | 9.4 | 9.4 |
| | Titanate | Titanate 3 | 13.9 | 9.3 | 9.3 | 9.3 | 9.3 | - |
| | | Titanate 6 | 4.6 | 9.3 | - | - | - | 18.5 |
| | | Titanate 12 | - | - | 9.3 | - | - | - |
| | | Titanate 13 | - | - | - | 9.3 | - | - |
| | | Titanate 14 | - | - | - | - | 9.3 | - |
| | Other Materials | Barium sulfate | 31.3 | 31.3 | 31.3 | 31.3 | 31.3 | 31.3 |
| | | Natural mica | 5.1 | 5.1 | 5.1 | 5.1 | 5.1 | 5.1 |
| | | Cashew dust | 5.4 | 5.4 | 5.4 | 5.4 | 5.4 | 5.4 |
| | | Iron oxide | 9.3 | 9.3 | 9.3 | 9.3 | 9.3 | 9.3 |
| | | Zirconium silicate | 8.5 | 8.5 | 8.5 | 8.5 | 8.5 | 8.5 |
| | | Antimony trisulfide | 1.8 | 1.8 | 1.8 | 1.8 | 1.8 | 1.8 |
| | | Synthetic graphite | 1.5 | 1.5 | 1.5 | 1.5 | 1.5 | 1.5 |
| | | Aramid fibers | 2.5 | 2.5 | 2.5 | 2.5 | 2.5 | 2.5 |
| | | Hydrated Lime | 1.6 | 1.6 | 1.6 | 1.6 | 1.6 | 1.6 |
| | | Rock wool | 5.1 | 5.1 | 5.1 | 5.1 | 5.1 | 5.1 |
| Copper Content in Terms of Copper Element (% by mass) | | | 0 | 0 | 0 | 0 | 0 | 0 |
| Mass Ratio of Titanate to Binder (Titanate/Binder) | | | 2.0 | 2.0 | 2.0 | 2.0 | 2.0 | 2.0 |
| Evaluations of Friction Member | Rockwell Hardness | | 61 | 64 | 59 | 63 | 65 | 48 |
| | Fade Test | Average *µ* | 0.411 | 0.387 | 0.387 | 0.380 | 0.408 | 0.365 |
| | | Δ *µ* (Maximum - Minimum) | 0.08 | 0.08 | 0.10 | 0.10 | 0.08 | 0.06 |

## Claims

1. A friction modifier made of a titanate, the titanate being a salt of at least one element selected from the group consisting of alkali metals and alkaline earth metals, the titanate having a decomposition rate of not less than 30% by mass and not more than 100% by mass when heated at 800°C for an hour in a nitrogen atmosphere.

2. The friction modifier according to claim 1, wherein when the titanate is heated at 800°C for an hour in a nitrogen atmosphere, a rate of formation of a titanate with a hollandite crystal structure is not less than 10% by mass and not more than 100% by mass.

3. The friction modifier according to claim 1 or 2, wherein the titanate comprises at least one of potassium lithium titanate and potassium magnesium titanate.

4. The friction modifier according to any one of claims 1 to 3, wherein the titanate is in form of platy particles.

5. The friction modifier according to any one of claims 1 to 4, wherein the titanate has an average particle diameter of not less than 0.1 µm and not more than 100 µm.

6. The friction modifier according to any one of claims 1 to 5, wherein the titanate has a specific surface area of not less than 0.1 m²/g and not more than 10 m²/g.

7. The friction modifier according to any one of claims 1 to 6, wherein the titanate has a rate of alkali metal ion dissolution of not less than 0.01% by mass and not more than 15% by mass.

8. A friction material composition containing the friction modifier according to any one of claims 1 to 7 and a binder and having a content of copper component of less than 0.5% by mass in terms of copper element.

9. The friction material composition according to claim 8, wherein a content of the titanate is not less than 1% by mass and not more than 40% by mass relative to a total amount of 100% by mass of the friction material composition.

10. The friction material composition according to claim 8 or 9, wherein a mass ratio of the titanate to the binder (titanate/binder) is not less than 0.1 and not more than 8.

11. The friction material composition according to any one of claims 8 to 10, wherein a content of steel-based fibers is less than 10% by mass relative to a total amount of 100% by mass of the friction material composition.

12. A friction material being a formed body of the friction material composition according to any one of claims 8 to 11.

13. A friction member comprising the friction material according to claim 12.
